# EUROPEAN PATENT APPLICATION

(11) **EP 4 318 835 A1**
(43) Date of publication of application: **07.02.2024**
(21) Application number: 21933098.2
(22) Date of filing: 26.03.2021
(51) Int. Cl.: H02G 5/06, H02B 13/035

(54) **SOLID INSULATED BUS AND GAS-INSULATED SWITCHGEAR PROVIDED THEREWITH**

(71) Applicant: MITSUBISHI ELECTRIC CORPORATION, Chiyoda-ku Tokyo 100-8310 (JP)
(72) Inventor: SAIONJI Rei, Tokyo 100-8310 (JP); YAMADA Shintaro, Tokyo 100-8310 (JP); KUROAKI Shintaro, Tokyo 100-8310 (JP)
(74) Representative: Witte, Weller & Partner Patentanwälte mbB
(86) International application number: PCT/JP2021/012875
(87) International publication number: WO 2022/201493

(57) **Abstract**

In a solid insulated bus (100), a cylindrical grounding sheet (11) having electrical conductivity and flexibility is attached to a plurality of insulation adapters (1) and a bus (2). If a ground wire (12) is connected to the grounding sheet (11), a first grounding dielectric layer (10a) on a surface of each of the insulation adapters (1) and a second grounding dielectric layer (10b) on a surface of the bus (2) are grounded. The grounding sheet (11) has a cylindrical shape, and thus the grounding sheet (11) is easily brought into close contact with the first grounding dielectric layer (10a) and the second grounding dielectric layer (10b), and an attaching operation is easy, whereby an operation time at the time of installing a gas-insulated switchgear can be shortened.

## Description

### TECHNICAL FIELD

The present disclosure relates to a solid insulated bus and a gas-insulated switchgear provided therewith.

### BACKGROUND ART

A gas-insulated switchgear includes a circuit breaker tank and a bus tank which are tightly closed containers in which an insulation gas has been sealed, an operation chamber, a control chamber, a cable chamber, and the like (for example, Patent Document 1). If SF₆ gas having excellent insulation properties is sealed as the insulation gas in the tightly closed containers, main circuit devices are arranged in a more compact manner. In addition, in recent years, there is also a case where, for example, a gas that is superior also in an environmental aspect such as dry air is sealed as an alternative gas instead of SF₆ gas.

For a bus portion of such a gas-insulated switchgear, a gas bus method is generally employed in which, when the gas-insulated switchgear is installed, the bus tank is connected and a bus conductor in the bus tank is connected. In addition, in recent years, as described in Non-Patent Document 1, there is also a case where a solid insulated bus is used so that gas processing work on site is not needed at the time of installing a gas-insulated switchgear.

The solid insulated bus is composed of: a bus obtained by coating the periphery of a bus conductor with an insulation material; and a plurality of insulation adapters supporting the bus. When the bus conductor is charged, electric charges are accumulated on the surface of the insulation material coating the bus conductor, and thus it is necessary to cause the electric charges to go down to a ground. However, if grounding is performed at many points in order to cause electric charges on the surface of the bus and the surfaces of the plurality of insulation adapters to go down to the ground, a loop circuit is formed between the solid insulated bus and the earth. Consequently, circulation current is generated, and this leads to degradation of the insulation material.

Considering this, a method has been employed in which: grounding dielectric layers are each formed by coating the surface of a solid insulated bus with an electrically-conductive paint; and, out of the grounding dielectric layers, a grounding dielectric layer on the surface of each of insulation adapters and a grounding dielectric layer on the surface of a bus are connected to perform grounding at one point. Further, since there is a possibility that the grounding dielectric layers are insufficiently connected at the connection portion between the bus and the insulation adapter, grounding is assured by winding a belt-like grounding sheet on the surface of the solid insulated bus. As the grounding sheet, a thin mesh sheet made of copper is used, for example.

### CITATION LIST

### PATENT DOCUMENT

Patent Document 1: Japanese Patent No. 6811905

### NON-PATENT DOCUMENT

Non-Patent Document 1: Catalog from NKT, 26 589 12 (issued on March 13, 2017)

### SUMMARY OF THE INVENTION

### PROBLEMS TO BE SOLVED BY THE INVENTION

However, a conventional grounding sheet easily slips during a winding operation, and a gap is easily generated between the grounding sheet and the solid insulated bus. Thus, it is difficult to bring the grounding sheet into close contact with the solid insulated bus, whereby a problem arises in that a long time is required to perform an attaching operation. Therefore, at the time of installing a gas-insulated switchgear including a solid insulated bus, a long time is required to perform an attaching operation, of the solid insulated bus, including a winding operation of a grounding sheet, whereby a problem arises in that workability is low.

The present disclosure has been made to solve the above problem, and an object of the present disclosure is to provide a solid insulated bus that can be assuredly and easily grounded and that enables the time for an attaching operation of the solid insulated bus to be shortened. In addition, an object of the present disclosure is to shorten an operation time at the time of installing a gas-insulated switchgear including the solid insulated bus.

### SOLUTION TO THE PROBLEMS

A solid insulated bus according to the present disclosure includes a bus having a bus conductor and an insulation material coating a periphery of the bus conductor, and insulation adapters provided at both end portions of the bus and supporting the bus, the solid insulated bus including: a first grounding dielectric layer provided on a surface of each of the insulation adapters; a second grounding dielectric layer provided on a surface of the bus; and a grounding sheet attached to the insulation adapter and the bus, and in close contact with the first grounding dielectric layer and the second grounding dielectric layer, wherein the grounding sheet is a cylindrical or semi-cylindrical sheet having electrical conductivity and flexibility.

A gas-insulated switchgear according to the present disclosure includes a plurality of gas-insulated switchgear devices arranged side by side in a row and each having a circuit breaker tank accommodating a circuit breaker and a bus tank accommodating a bus, wherein the solid insulated bus according to the present disclosure is provided to a portion at which the buses of the plurality of gas-insulated switchgear devices are connected to each other.

### EFFECT OF THE INVENTION

In the solid insulated bus according to the present disclosure, the cylindrical or semi-cylindrical grounding sheet having flexibility is easily brought into close contact with the first grounding dielectric layer and the second grounding dielectric layer. Consequently, grounding can be assuredly and easily performed, and the time for an attaching operation of the solid insulated bus can be shortened.

In addition, in the gas-insulated switchgear according to the present disclosure, the solid insulated bus according to the present disclosure is provided to a portion at which the buses of the plurality of gas-insulated switchgear devices are connected to each other. Consequently, grounding can be assuredly performed, and attachment is easy, whereby the operation time at the time of installing the gas-insulated switchgear can be shortened.

Objects, features, aspects, and effects of the present disclosure other than those described above will become more apparent from the following detailed description with reference to the drawings.

### BRIEF DESCRIPTION OF THE DRAWINGS

[FIG. 1] FIG. 1 is a cross-sectional view showing a solid insulated bus according to embodiment 1.
[FIG. 2] FIG. 2 is a perspective view showing the solid insulated bus according to embodiment 1.
[FIG. 3] FIG. 3 is a cross-sectional view showing a solid insulated bus according to embodiment 2.
[FIG. 4] FIG. 4 is a cross-sectional view showing a solid insulated bus according to embodiment 3.
[FIG. 5] FIG. 5 is a perspective view showing the solid insulated bus according to embodiment 3.
[FIG. 6] FIG. 6 is a cross-sectional view showing a solid insulated bus according to embodiment 4.
[FIG. 7] FIG. 7 is a perspective view showing the solid insulated bus according to embodiment 4.
[FIG. 8] FIG. 8 is a side cross-sectional view showing a gas-insulated switchgear device according to embodiment 5.

### DESCRIPTION OF EMBODIMENTS

### Embodiment 1

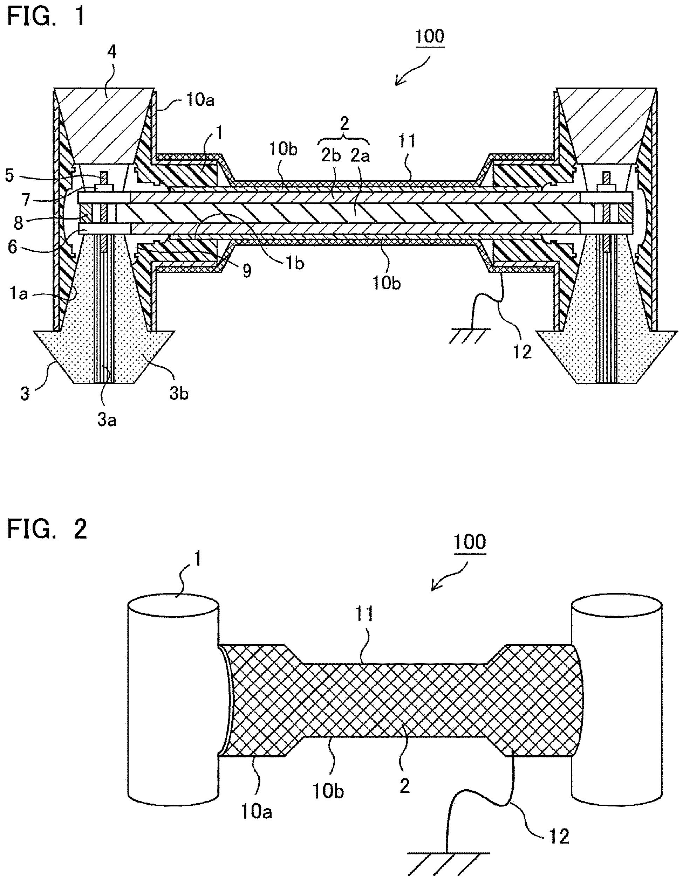

Hereinafter, a solid insulated bus according to embodiment 1 will be described with reference to the drawings. FIG. 1 and FIG. 2 are respectively a cross-sectional view and a perspective view showing the solid insulated bus according to embodiment 1. The same or corresponding portions in the drawings are denoted by the same reference characters. A solid insulated bus 100 according to embodiment 1 is mainly used for a gas-insulated switchgear device. In particular, when a plurality of the gas-insulated switchgear devices are arranged side by side in a row, the solid insulated bus 100 is disposed at a portion at which buses of the gas-insulated switchgear devices are connected to each other.

The solid insulated bus 100 includes: a bus 2 having a bus conductor 2a and an insulation material 2b coating a periphery of the bus conductor 2a; and insulation adapters 1 provided at both end portions of the bus 2 and supporting the bus 2. Each of the insulation adapters 1 in FIG. 1 has: a cylinder portion provided in the vertical direction; and a cylinder portion provided also in the horizontal direction so as to intersect with the cylinder portion provided in the vertical direction. Thus, the insulation adapter 1 has a T shape.

The insulation adapter 1 is made from an insulation material that is comparatively flexible and that has elasticity, such as a silicone resin or an ethylene-propylene resin. The bus 2 is formed by coating the periphery of the bus conductor 2a with the insulation material 2b such as a silicone rubber or an epoxy resin. The cylinder portion, of the insulation adapter 1, provided in the horizontal direction serves as a fitting portion 1b into which the bus 2 is fitted. Both end portions of the bus 2 are inserted and fixed to the fitting portions 1b of the respective insulation adapters 1.

The cylinder portion, of the insulation adapter 1, provided in the vertical direction has plug-in portions 1a formed in tapered shapes such that the diameters thereof decrease toward a center portion from respective both end portions. A bushing 3 and an insulation plug 4 are screwed into the respective plug-in portions 1a at two locations so as to be connected to the insulation adapter 1 while ensuring insulation performance.

The bushing 3 is, for example, a bus connection bushing for a gas-insulated switchgear device and includes a center conductor 3a which is provided inside the bushing 3 and which has a periphery coated with an insulation material 3b such as an epoxy resin. The insulation material 3b has a cone shape that is tapered toward an end thereof, and this portion is fitted to the corresponding plug-in portion 1a. The insulation plug 4 is made from an insulation material such as an epoxy resin.

In an intersection portion between the cylinder portion, of the insulation adapter 1, provided in the vertical direction and the cylinder portion thereof provided in the horizontal direction, an electrically-conductive rubber 9 is provided, and two arc-shaped fixation conductors 6 and a tilt prevention conductor 8 interposed therebetween and having a substantially columnar shape are incorporated. For each of the fixation conductors 6, a metal having high electrical conductivity such as copper or aluminum is used.

The bus 2 is inserted into the fitting portions 1b of the insulation adapters 1, and then stud bolts 5 are fastened with nuts 7. Consequently, the bus conductor 2a inside the bus 2 is fixed, and the bus 2 is connected to the insulation adapters 1. In this manner, the bus conductor 2a inside the bus 2 and the center conductors 3a inside the bushings 3 are connected to each other inside the insulation adapters 1.

A first grounding dielectric layer 10a is provided on the surface of each of the insulation adapters 1, and a second grounding dielectric layer 10b is provided on the surface of the bus 2. The first grounding dielectric layer 10a and the second grounding dielectric layer 10b are formed by, for example, coating the respective surfaces with an electrically-conductive paint or the like.

The solid insulated bus 100 further includes a grounding sheet 11 which is attached to the insulation adapter 1 and the bus 2 and which is in close contact with the first grounding dielectric layer 10a and the second grounding dielectric layer 10b. The grounding sheet 11 is a sheet having electrical conductivity and flexibility and is, for example, a mesh sheet containing a metal material such as copper, silver, or aluminum. In embodiment 1, the grounding sheet 11 which has a cylindrical shape and which has a diameter smaller than the diameter of the bus 2 is used.

The grounding sheet 11 is, owing to the flexibility thereof, brought into close contact with the first grounding dielectric layer 10a and the second grounding dielectric layer 10b, and thus a current conduction function is maintained. A ground wire 12 is connected to the grounding sheet 11, whereby the first grounding dielectric layer 10a and the second grounding dielectric layer 10b are grounded at one point. Consequently, the potential of each of the first grounding dielectric layer 10a and the second grounding dielectric layer 10b becomes 0.

A method for attaching the grounding sheet 11 in embodiment 1 will be briefly described. First, the bus 2 not having yet been connected to the insulation adapters 1 is inserted into the cylindrical grounding sheet 11. Subsequently, the insulation adapters 1 are connected to both end portions of the bus 2 inserted into the grounding sheet 11. Then, end portions of the grounding sheet 11 are stretched so as to have increased diameters, and the fitting portions 1b of the insulation adapters 1 are covered with the grounding sheet 11. In embodiment 1, the grounding sheet 11 has a smaller diameter than the bus 2, and thus is assuredly brought into close contact with each of the first grounding dielectric layers 10a and the second grounding dielectric layer 10b without generating any gap between the corresponding insulation adapter 1 and the bus 2.

Although the configuration of the solid insulated bus 100 has been described with reference to FIG. 1 and FIG. 2 in embodiment 1, the configuration of the solid insulated bus according to the present disclosure is not limited thereto, and various modifications are possible. For example, the shape of each of the insulation adapters 1 may be a cross shape instead of the T shape. In addition, the grounding sheet is not limited to a mesh sheet made of a metal, the material of the grounding sheet only has to have electrical conductivity, and a structure other than a mesh structure may be used.

In embodiment 1, the cylindrical grounding sheet 11 having flexibility and attached to each of the insulation adapters 1 and the bus 2 is easily brought into close contact with the corresponding first grounding dielectric layer 10a and the second grounding dielectric layer 10b. Consequently, grounding can be assuredly and easily performed without impairing current conduction functions of the first grounding dielectric layer 10a and the second grounding dielectric layer 10b, whereby the time for an attaching operation can be shortened.

In addition, since the grounding sheet 11 having a smaller diameter than the bus 2 is used, no gap is generated between the bus 2 and the insulation adapter 1, and the grounding sheet 11 is easily brought into close contact with the first grounding dielectric layer 10a and the second grounding dielectric layer 10b. Therefore, no component such as a fixation band for bringing the grounding sheet 11 into close contact is necessary. Further, since the grounding sheet 11 has a cylindrical shape, attachment can easily be performed just by inserting the bus 2 thereinto. Therefore, the operation time can be shortened as compared to a conventional method in which a grounding sheet is wound.

### Embodiment 2

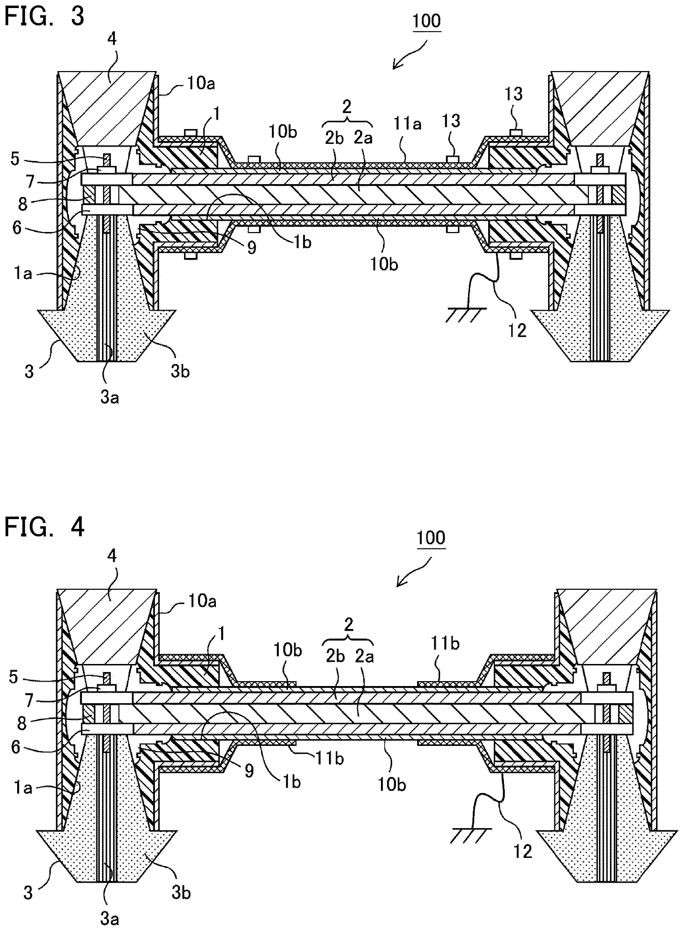

FIG. 3 is a cross-sectional view showing a solid insulated bus according to embodiment 2. A grounding sheet 11a in embodiment 2 has a cylindrical shape so as to have a diameter larger than the diameter of the bus 2 and is fixed to the insulation adapters 1 and the bus 2 by fixation bands 13. The other components of the solid insulated bus 100 according to embodiment 2 are the same as those in the above embodiment 1, and thus descriptions thereof will be omitted.

In embodiment 2 as well, the cylindrical grounding sheet 11a is, owing to the flexibility thereof, brought into close contact with each of the first grounding dielectric layers 10a and the second grounding dielectric layer 10b, and a current conduction function is maintained. However, since the diameter of the grounding sheet 11a is larger than the diameter of the bus 2, the grounding sheet 11a is fixed by the fixation bands 13 so as to be assuredly brought into close contact with the first grounding dielectric layer 10a and the second grounding dielectric layer 10b.

The grounding sheet 11a can be attached after the bus 2 is connected to each of the insulation adapters 1. That is, as the diameter of the grounding sheet 11a, a diameter that enables insertion of the bus 2 connected to the insulation adapter 1 and that is set to be as small as possible is selected.

According to embodiment 2, an attaching operation is further facilitated, whereby the operation time can be shortened.

### Embodiment 3

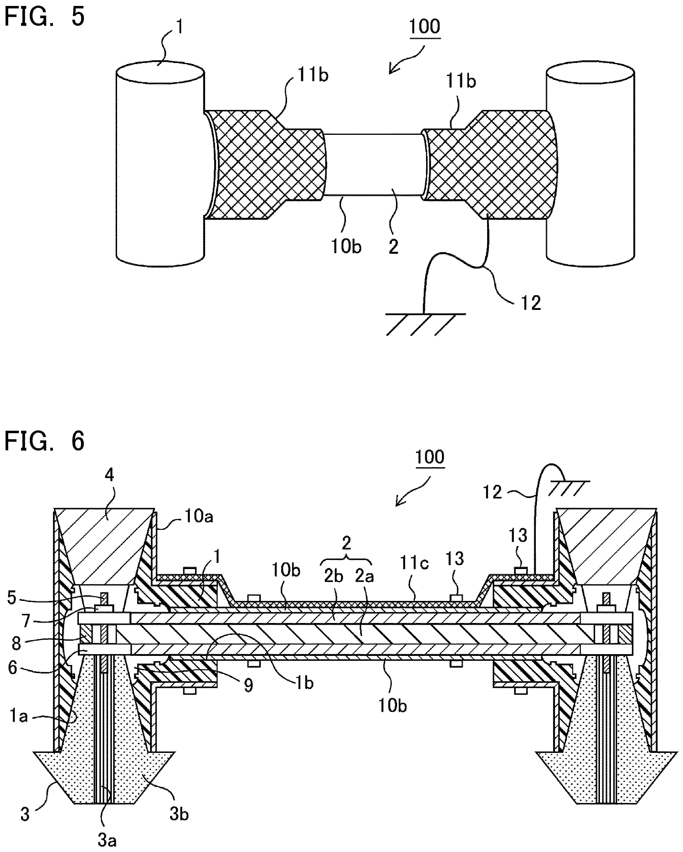

FIG. 4 and FIG. 5 are respectively a cross-sectional view and a perspective view showing a solid insulated bus according to embodiment 3. In a solid insulated bus 100 according to embodiment 3, two cylindrical grounding sheets 11b are attached so as to cover connection portions between the bus 2 and the insulation adapters 1. The other components of the solid insulated bus 100 according to embodiment 3 are the same as those in the above embodiment 1, and thus descriptions thereof will be omitted.

The grounding sheets 11 and 11a in the above embodiment 1 and embodiment 2 cover the entire bus 2 and the fitting portion 1b of each of the insulation adapters 1. Meanwhile, each of the grounding sheets 11b may cover at least parts of the corresponding insulation adapter 1 and the bus 2 and may be in close contact with parts of the corresponding first grounding dielectric layer 10a and the second grounding dielectric layer 10b.

The grounding sheet 11b in embodiment 3 is attached so as to cover a connection portion between the bus 2 and the insulation adapter 1 and the periphery of the connection portion. With such a configuration, the grounding sheet 11b having a smaller area than the grounding sheets in the above embodiment 1 and embodiment 2 makes it possible to ensure current conduction functions of the first grounding dielectric layer 10a and the second grounding dielectric layer 10b and perform grounding.

The diameter of the grounding sheet 11b in embodiment 3 may be smaller or larger than the diameter of the bus 2. If the diameter of the grounding sheet 11b is larger than the diameter of the bus 2, the grounding sheet 11b is fixed by the fixation bands 13 in the same manner as that in the above embodiment 2.

According to embodiment 3, in addition to the same advantageous effects as those in the above embodiment 1 or embodiment 2, the area of the grounding sheet 11b can be made smaller, and thus cost reduction is achieved, and an attaching operation is also facilitated.

### Embodiment 4

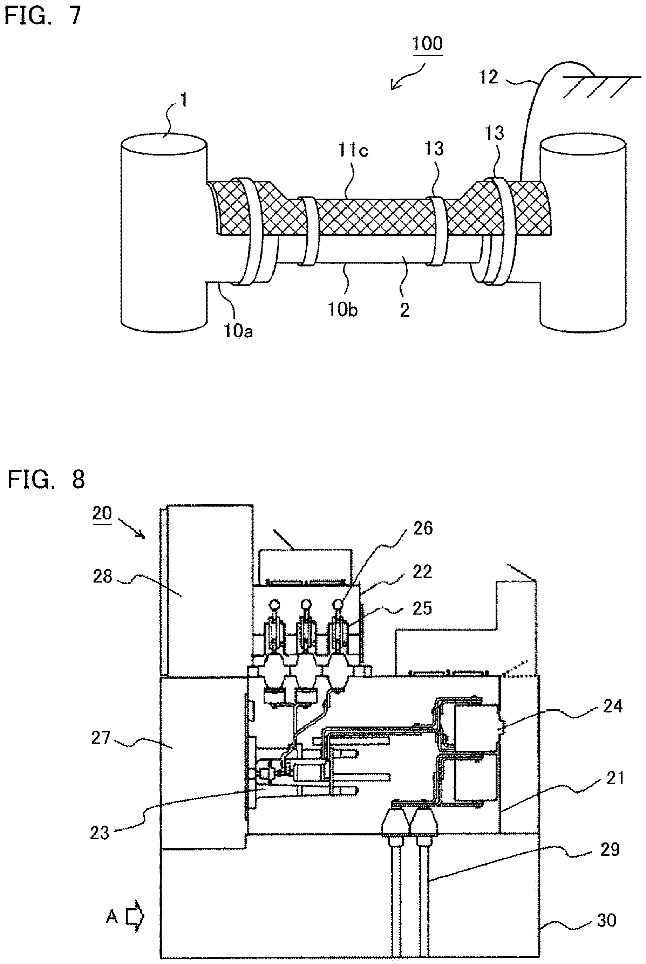

FIG. 6 and FIG. 7 are respectively a cross-sectional view and a perspective view showing a solid insulated bus according to embodiment 4. A grounding sheet 11c in embodiment 4 has a semi-cylindrical shape and is fixed to the insulation adapters 1 and the bus 2 by the fixation bands 13. The other components of a solid insulated bus 100 according to embodiment 4 are the same as those in the above embodiment 1, and thus descriptions thereof will be omitted.

In embodiment 4, the semi-cylindrical grounding sheet 11c is attached so as to cover the entire bus 2 and the fitting portion 1b of each of the insulation adapters 1 and is assuredly brought into close contact with the corresponding first grounding dielectric layer 10a and the second grounding dielectric layer 10b by the fixation bands 13. With such a configuration, the grounding sheet 11c having a smaller area than the grounding sheets in the above embodiment 1 and embodiment 2 makes it possible to ensure the current conduction functions of the first grounding dielectric layer 10a and the second grounding dielectric layer 10b and perform grounding. It is noted that the semi-cylindrical grounding sheet 11c only has to cover approximately half of the surface of the bus 2 when the grounding sheet 11c is attached to the insulation adapter 1 and the bus 2.

In addition, a method for attaching the grounding sheet 11c in embodiment 4 only has to include connecting the bus 2 to the insulation adapters 1, covering the bus 2 and the insulation adapters 1 with the grounding sheet 11c, and fixing the grounding sheet 11c by the fixation bands 13. Thus, it is unnecessary to insert the bus 2 into the grounding sheet, whereby attaching can be performed in a short time.

According to embodiment 4, an attaching operation is further facilitated, whereby the operation time can be shortened.

### Embodiment 5

In embodiment 5, a gas-insulated switchgear including the solid insulated bus 100 according to any of the above embodiment 1 to embodiment 4 and a plurality of gas-insulated switchgear devices arranged so as to be electrically connected to each other, will be described.

FIG. 8 is a side cross-sectional view showing a gas-insulated switchgear device according to embodiment 5, and the left side indicated by arrow A in FIG. 8 is the front surface. It is noted that FIG. 8 shows an example of the internal configuration of the gas-insulated switchgear device, and the configuration of the gas-insulated switchgear device according to the present disclosure is not limited thereto. The solid insulated bus 100 will be described with reference back to FIG. 1.

As shown in FIG. 8, a gas-insulated switchgear device 20 includes a circuit breaker tank 21 and a bus tank 22 in which an insulation gas has been sealed. Circuit breakers 23 and instrument current transformers 24 are accommodated in the circuit breaker tank 21, and disconnectors 25 and buses 26 are accommodated in the bus tank 22. An operation chamber 27 accommodating an operation mechanism is disposed frontward of the circuit breaker tank 21, and a control chamber 28 accommodating a control device is disposed above the operation chamber 27. In addition, a cable chamber 30 accommodating power cables 29 is disposed below the circuit breaker tank 21.

The buses 26 for three phases are disposed parallelly in a board width direction inside the bus tank 22. Both ends of each of the buses 26 are connected to and supported by bus connection bushings disposed so as to penetrate walls of the bus tank 22.

A gas-insulated switchgear according to embodiment 5 includes a plurality of the gas-insulated switchgear devices 20 each of which is one shown in FIG. 8 and which are arranged side by side in a row, and the solid insulated bus 100 is provided to a portion at which the buses 26 of the plurality of the gas-insulated switchgear devices 20 are connected to each other. Any of the buses 26 of each gas-insulated switchgear device 20 is connected to either of the bushings 3 (see FIG. 1) as bus connection bushings outside of the bus tank 22 of the gas-insulated switchgear device 20 and is connected to the corresponding one of the insulation adapters 1 of the solid insulated bus 100 via the bushing 3. Likewise, any of the buses 26 of another gas-insulated switchgear device 20 is connected to the other insulation adapter 1 of the solid insulated bus 100 via the corresponding bushing 3. In this manner, the buses 26 of the respective gas-insulated switchgear devices 20 are electrically connected to each other by the solid insulated bus 100.

According to embodiment 5, in the gas-insulated switchgear including the plurality of gas-insulated switchgear devices 20 arranged side by side in a row, the solid insulated bus 100 is provided to the portion at which the buses 26 of the plurality of the gas-insulated switchgear devices 20 are connected to each other. Consequently, grounding can be assuredly performed, and attaching is easy so that the operation time at the time of installing the gas-insulated switchgear can be shortened.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure. It is therefore understood that numerous modifications which have not been exemplified can be devised without departing from the scope of the specification of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: insulation adapter
- 1a: plug-in portion
- 1b: fitting portion
- 2: bus
- 2a: bus conductor
- 2b: insulation material
- 3: bushing
- 3a: center conductor
- 3b: insulation material
- 4: insulation plug
- 5: stud bolt
- 6: fixation conductor
- 7: nut
- 8: tilt prevention conductor
- 9: electrically-conductive rubber
- 10a: first grounding dielectric layer
- 10b: second grounding dielectric layer
- 11, 11a, 11b, 11c: grounding sheet
- 12: ground wire
- 13: fixation band
- 20: gas-insulated switchgear device
- 21: circuit breaker tank
- 22: bus tank
- 23: circuit breaker
- 24: instrument current transformer
- 25: disconnector
- 26: bus
- 27: operation chamber
- 28: control chamber
- 29: power cable
- 30: cable chamber
- 100: solid insulated bus

## Claims

1. A solid insulated bus including a bus having a bus conductor and an insulation material coating a periphery of the bus conductor, and insulation adapters provided at both end portions of the bus and supporting the bus,
the solid insulated bus comprising:
a first grounding dielectric layer provided on a surface of each of the insulation adapters;
a second grounding dielectric layer provided on a surface of the bus; and
a grounding sheet attached to the insulation adapter and the bus, and in close contact with the first grounding dielectric layer and the second grounding dielectric layer, wherein
the grounding sheet is a cylindrical or semi-cylindrical sheet having electrical conductivity and flexibility.

2. The solid insulated bus according to claim 1, wherein
the grounding sheet has a cylindrical shape so as to have a diameter smaller than a diameter of the bus.

3. The solid insulated bus according to claim 1, wherein
the grounding sheet has a cylindrical shape so as to have a diameter larger than a diameter of the bus and is fixed to each of the insulation adapter and the bus by a fixation band.

4. The solid insulated bus according to any one of claims 1 to 3, wherein
two cylindrical said grounding sheets are attached so as to cover connection portions between the bus and the insulation adapters.

5. The solid insulated bus according to claim 1, wherein
the grounding sheet has a semi-cylindrical shape and is fixed to each of the insulation adapter and the bus by a fixation band.

6. The solid insulated bus according to any one of claims 1 to 5, wherein
the grounding sheet is a mesh sheet containing a metal material.

7. A gas-insulated switchgear comprising
a plurality of gas-insulated switchgear devices arranged side by side in a row and each having a circuit breaker tank accommodating a circuit breaker and a bus tank accommodating a bus, wherein
the solid insulated bus according to any one of claims 1 to 6 is provided to a portion at which the buses of the plurality of gas-insulated switchgear devices are connected to each other.

8. The gas-insulated switchgear according to claim 7, wherein
the bus of each of the gas-insulated switchgear devices is connected to a bus connection bushing outside of the bus tank of the gas-insulated switchgear device and is connected to the corresponding insulation adapter of the solid insulated bus via the bus connection bushing.
